# EUROPÄISCHE PATENTSCHRIFT

(11) **EP 2 250 224 B1**
(45) Veröffentlichungstag und Bekanntmachung des Hinweises auf die Patenterteilung: **26.04.2017**
(21) Anmeldenummer: 09715959.4
(22) Anmeldetag: 27.02.2009
(51) Int. Cl.: C09D 5/44, C09D 7/12

(54) **KATHODISCHER ELEKTROTAUCHLACK ENTHALTEND VIERWERTIGE METALLORGANISCHE VERBINDUNG**
CATHODIC ELECTRODEPOSITION PAINT CONTAINING A QUATERNARY METAL-ORGANIC COMPOUND
PEINTURE POUR ÉLECTRODÉPOSITION CATHODIQUE COMPRENANT UN COMPOSÉ ORGANOMÉTALLIQUE QUATERNAIRE

(30) Priorität: 29.02.2008 DE 102008012085
(43) Veröffentlichungstag der Anmeldung: 17.11.2010
(73) Patentinhaber: BASF Coatings GmbH, 48165 Münster (DE)
(72) Erfinder: PETERS, Verena, 48167 Münster (DE); BAUMGART, Hubert, 48163 Münster (DE); DORNBUSCH, Michael, 40599 Düsseldorf (DE)
(74) Vertreter: BASF IP Association
(86) Internationale Anmeldenummer: PCT/EP2009/001402
(87) Internationale Veröffentlichungsnummer: WO 2009/106337

(56) Entgegenhaltungen:
- EP-A- 0 387 878
- EP-A- 0 442 362
- EP-A2- 0 567 066
- DE-C1- 4 303 787
- US-A- 4 401 774

## Beschreibung

Die vorliegende Erfindung betrifft einen kathodischen Elektrotauchlack enthaltend mindestens ein in Wasser dispergierbares, kationische Gruppen enthaltendes organisches Bindemittel und eine metallorganische Verbindung eines Elements der 4. Nebengruppe des Periodensystems. Die vorliegende Erfindung betrifft weiterhin ein Verfahren zur Herstellung des kathodischen Elektrotauchlacks und seine Verwendung zur Beschichtung von Substraten. Darüber hinaus betrifft die vorliegende Erfindung ein mit dem kathodischen Elektrotauchlack beschichtetes Substrat sowie dessen Herstellung.
Metallorganische Verbindungen von Elementen der 4. Nebengruppe sind bekannt. Sie werden beispielsweise als Vernetzungskatalysatoren bei der Herstellung von Polyurethanen verwendet, insbesondere in lösemittelhaltigen Systemen.
WO 98/41322 A1 beschreibt verschiedene metallorganische Komplexe von Zirkonium und Hafnium. Diese werden zur Produktion von (Poly)urethanen für Klebstoffe, Schäume, Beschichtungen, Dichtungsmassen und Plastikwaren verwendet, welche beispielsweise im Spritzpistolen-Verfahren und im Spritzguss-Verfahren hergestellt werden. Die Formulierungen der WO 98/41322 A1 basieren ausnahmslos auf organischen Lösemitteln.

EP 0 567 066 A2 beschreibt Beschichtungsmittelzusammensetzungen zur kationischen Elektroabscheidung, umfassend als Hauptkomponente ein Gemisch aus einem kationischen Harz mit primären Hydroxylgruppen und ein Härtungsmittel sowie Metallverbindungen als Katalysatoren. Die Metallverbindung kann in einer solchen Menge verwendet werden, dass das Verhältnis des Metallgehalts der Metallverbindung zum Feststoffgehalt des kationischen Harzes 0,5 bis 5 Gew.% beträgt. Als Metallverbindung wird unter anderem Zirconiumacetylacetonat erwähnt.

US 2004/0220326 A1 beschreibt Katalysatoren für die Urethanvemetzung in wässrigen 2-Komponenten-Polyurethanlacken. Hierzu werden organische Metallkomplexe der 5. und 6. Nebengruppe verwendet.
WO 00/34355 beschreibt Lewissäure-Katalysatoren, darunter metallorganische Verbindungen verschiedener Haupt- und Nebengruppen-Elemente. Diese werden zur Herstellung uretdionhaltiger, härtbarer Massen eingesetzt, die bei niedrigen Temperaturen aushärten. Es handelt sich hierbei insbesondere um Pulverlacke.

In der US 2007/0010644 A1 wird die Herstellung von Elastomeren beschrieben. Durch die gleichzeitige Verwendung zweier unterschiedlicher Katalysatoren, darunter ein organischer Metallkomplex, werden schneller härtende Elastomere erhalten, die beim Spritzen weniger Verluste durch Abtropfen zeigen und deren elastomere Produkte nach kürzerer Zeit aus den Giessformen entnommen werden können.

He et al. (Journal of Coatings Technology 2002, 74 (930), 31-36) beschreiben ein Zwei-Komponenten-Polyurethan-(2-K-PU-)-System, das Metallcarboxylate oder Metall-ß-Diketonate enthält. Untersucht wird die Urethanbildungsrate von Butylisocyanat mit 2-Ethylhexanol im Vergleich zur Harnstoffbildung mit Wasser. Hierbei erweisen sich Zirkonium-Verbindungen als gute Katalysatoren der Urethanbildung. Es wird beschrieben, dass die Zirkonium-Diketone allerdings mit der Zeit im Wäßrigen hydrolysieren, so dass eine Inaktivierung des Zirkonium-Katalysators im wäßrigen Medium eintritt. Das Auftragen der Beschichtung auf das Substrat erfolgt durch Abziehen mit einem Drahtapplikator, bevor sich die Härtung anschliesst. Des weiteren beschreiben He et al. den Einsatz eines Zirkonium-Diketonats in einem Klarlack, der auf einer Polyesterdispersion basiert, sowie in einer lösemittelhaltigen 2-Komponenten-Acrylat-Emulsion. In diesen Fällen wird ein verbesserter Glanz (20°) der erhaltenen Beschichtung erreicht.

Florio et al. (Paint and Coatings Industry 2000, 16, 80-94) beschreiben verschiedene Zinn-freie organische Katalysatoren der Urethanbildung, darunter organische Verbindungen von Bismut, Aluminium und Zirkonium. Diese Reihe an metallorganischen Verbindungen ist unter der Bezeichnung "K-KAT^{®}" kommerziell erhältlich. Florio et al. beschreiben geeignete Einsatzgebiete dieser Bismut-, Atuminium- und Zirkonium-Verbindungen. Während die Bismut-Verbindungen (K-KAT 348, K-KAT XC-B203) zum Einsatz in Elektrotauchlackierungen geeignet erscheinen, ist generell das Problem der Katalysator-Deaktivierung durch Hydrolyse zu beachten. Gerade durch Wasser und Anionen, insbesondere Phosphationen, kann eine Deaktivierung der eingesetzten Katalysatoren eintreten, die eventuell erst nach einigen Tagen im Lackierungsergebnis evident wird. Beispielsweise können Polyetherpolyole als Verunreinigung Phosphationen aus dem Produktionsprozess enthalten. Florio et al. beschreiben, dass Phosphationen die Inaktivierung der genannten Katalysatoren, insbesondere von Zirkonium-Katalysatoren, induzieren können.

Kathodisch abscheidbare Elektrotauchlacke sind für den Einsatz in der kathodischen Elektrotauchlackierung (KTL) geeignet. Die KTL ist ein vor allem zum Grundieren häufig angewandtes Lackierverfahren, bei dem in Wasser gelöste oder dispergierte, kationische Gruppen tragende Bindemittel mit Hilfe von Gleichstrom auf elektrisch leitende Körper aufgebracht werden. Hierzu wird das zu beschichtende Substrat als Kathode geschaltet und in den kathodisch abscheidbaren Elektrotauchlack eingetaucht. Bei Anlegen eines Gleichstroms zwischen dem als Kathode geschalteten Substrat und einer ebenfalls in dem Elektrotauchlack befindlichen Anode gelangen in einer diffusionskontrollierten Grenzschicht die geladenen Lackmicellen bzw. Dispersionsteilchen an die jeweils entgegengesetzt geladene Elektrode, um dort durch pH-Änderung infolge der elektrolytischen Zersetzung des Wassers ausgefällt zu werden. Ist die Oberflächenladung der Lackmicellen bzw. Dispersionsteilchen positiv, so erfolgt die Abscheidung an der Kathode, d.h. auf dem als Kathode geschalteten Substrat. Der abgeschiedene Lackfilm hat einen hohen Festkörpergehalt und wird üblicherweise nach dem Entnehmen des Substrats aus dem Tauchbecken und eventuellen Reinigungsschritten durch Einbrennen vernetzt.

Üblicherweise erfüllen die heute im Einsatz befindlichen kathodisch abscheidbaren Elektrotauchlacke hohe Anforderungen an Korrosionsschutz, Kantenschutz, Oberflächenqualität und andere Eigenschaften, wie z.B. Schleifbarkeit. Indes wird überdies verlangt, dass eine kathodische Tauchlackierung sehr wenige Krater (kraterförmige Filmdefekte mit Vertiefungen, die bis nahe an den Untergrund reichen können, und die nach dem Trocknen bestehen bleiben) aufweist. Krater bilden sich insbesondere, wenn eine Störsubstanz mit einer gegenüber dem Lackfilm verringerten Oberflächenspannung vorliegt. Direkt nach dem Abscheiden sind keine Krater erkennbar. Sie treten erst im Zusammenhang mit den Fließphänomenen beim Einbrennvorgang auf. Derartige Störungen in einer kathodischen Elektrotauchlackierung können Durchmesser bis zu mehreren Millimetern besitzen. Sie sind auch nach erfolgter Decklackierung auf der Lackoberfläche oft noch erkennbar und bedingen daher aufwändige und kostenintensive Nacharbeit.

Trotz verschiedenster technischer Maßnahmen, wie z.B. Verringerung der Schichtdicke, Anhebung des Pigmentanteils des Elektrotauchlacks, Erhöhung der Lackviskosität, gründliche Reinigung und Entfettung der Substrate, ist es bisher nicht gelungen, diesen Fehler sicher zu vermeiden. Die Kraterneigung scheint insbesondere in Zinn-Katalysator-haltigen kathodischen Elektrotauchlacken besonders ausgeprägt zu sein. Eine besondere Störquelle stellt die Kontamination des kathodischen Elektrotauchbads mit Phosphationen dar. Die zur kathodischen Elektrotauchlackierung eingesetzten Substrate werden üblicherweise durch einen Phosphatierungsprozess vorbehandelt. Die phosphatierten Substrate werden anschließend zur Beschichtung in das Elektrotauchbad eingebracht. Aufgrund von Phosphatverschleppungen aus der Vorbehandlung kann es daher im kathodischen Elektrotauchbad zu einer Kontamination mit Phosphationen kommen, die mit herkömmlichen Mitteln kaum zu vermeiden ist. Insbesondere besteht dieses Problem in den üblicherweise in der industriellen kathodischen Elektrotauchlackierung eingesetzten Lackierstrassen.

Es bestand daher die Aufgabe, einen kathodischen Elektrotauchlack bereitzustellen, der eine verminderte Neigung zur Bildung von Kratern aufweist, so dass insbesondere auch bei der kathodischen Elektrotauchlackierung phosphatierter Substrate und der dadurch bedingten möglichen Kontamination des kathodischen Elektrotauchbades mit Phosphationen eine möglichst kraterfreie Beschichtung erhalten werden kann. Hierdurch kann eine aufwändige und kostenintensive Nacharbeit vermieden und somit die Produktion entsprechender lackierter Substrate zeit- und kostengünstiger gestaltet werden.

Diese Aufgabe wird überraschenderweise durch Bereitstellen eines kathodischen Elektrotauchlacks, enthaltend (A) mindestens ein in Wasser dispergierbares, kationische Gruppen enthaltendes organisches Bindemittel, wobei dem kathodischen Elektrotauchlack 0,005 - 0,5 Gew.%, bezogen auf den Festkörpergehalt des kathodischen Elektrotauchlacks, (B) eines organischen, vierwertigen Titan-, Zirkonium- oder Hafnium-Komplexes mit einem oder mehreren sauerstoffhaltigen Liganden zugegeben wurden, gelöst.

Dem erfindungsgemäßen kathodischen Elektrotauchlack werden 0,005 - 0,5 Gew.%, bevorzugt 0,025 - 0,25 Gew.%, besonders bevorzugt 0,05 - 0,15 Gew.%, bezogen auf den Festkörpergehalt des kathodischen Elektrotauchlacks, eines organischen, vierwertigen Titan-, Zirkonium- oder Hafnium-Komplexes mit einem oder mehreren sauerstoffhaltigen Liganden zugegeben.

Werden weniger als 0,005 Gew.%, bezogen auf den Festkörpergehalt des kathodischen Elektrotauchlacks, des organischen, vierwertigen Titan-, Zirkonium-oder Hafnium-Komplexes mit einem oder mehreren sauerstoffhaltigen Liganden eingesetzt, so ist die erfindungsgemäße Wirkung der Vermeidung von Kratern zu schwach ausgeprägt.

Werden mehr als 0,5 Gew.%, bezogen auf den Festkörpergehalt des kathodischen Elektrotauchlacks, des organischen, vierwertigen Titan-, Zirkonium- oder Hafnium-Komplexes mit einem oder mehreren sauerstoffhaltigen Liganden eingesetzt, so können neben Schwierigkeiten bei der homogenen Einarbeitung des Komplexes in das Gemisch und unerwünscht hohen Kosten auch nachteilige Effekte auf die Oberflächenbeschaffenheit des Films, wie beispielsweise erhöhte Rauigkeit, eintreten.

Bevorzugt ist mindestens ein sauerstoffhaltiger Ligand ein Alkanolat oder Enolat, insbesondere ein von Diketonen abgeleitetes Enolat. Besonders bevorzugt. ist der sauerstoffhaltige Ligand ein zwei- oder mehrzähniger Ligand. Noch bevorzugter dieser Ligand ein von einem ß-Diketon abgeleitetes Enolat. Ganz besonders bevorzugt ist der Ligand Acetylacetonat.

Als ganz besonders bevorzugte Metallkomplexe (B) werden Zirkonium-Acetylacetonat, Hafnium-Acetylacetonat oder Titan-Acetylacetonat eingesetzt.

Bevorzugt ist der Metallkomplex (B) ein Zirkonium- oder ein Hafnium-Komplex. Eine Vielzahl entsprechender Zirkonium-Komplexe ist einfach erhältlich. Entsprechende Hafnium-Komplexe zeichnen sich durch ihre besonders gute Stabilität aus.

Bevorzugt werden die Metallkomplexe (B) in kathodischen Elektrotauchlacken eingesetzt, denen weiterhin mindestens ein geeigneter zinnhaltiger Vernetzungskatalysator zugegeben wurde. Bevorzugt wurde den kathodischen Elektrotauchlacken ein Dialkylzinnoxid zugegeben, besonders bevorzugt Dioctylzinnoxid; noch bevorzugter Dibutylzinnoxid. Der zinnhaltige Vernetzungskatalysator wurde dem kathodischen Elektrotauchlack vorzugsweise in den üblichen und bekannten Anteilen, typischerweise in einem Anteil von 0,1 -10 Gew.%, bevorzugt von 0,3 - 5 Gew.%, besonders bevorzugt von 0,5 - 3 Gew.%, bezogen auf den Festkörpergehalt des kathodischen Elektrotauchlacks, zugesetzt. Ein zu geringer Anteil des Katalysators kann zu mangelhafter Vernetzung führen; ein zu hoher Anteil verursacht hohe Kosten und eine schlechtere Mahlbarkeit der Pasten bei nicht ausreichender Löslichkeit im Bindemittel.

Der erfindungsgemäße kathodische Elektrotauchlack weist vorzugsweise einen Festkörpergehalt von 12 - 25 Gew.% , besonders bevorzugt von 15 - 22 Gew.%, insbesondere bevorzugt von 18 - 20 Gew.%, jeweils bezogen auf den gesamten erfindungsgemäßen kathodischen Elektrotauchlack, auf. Der Festkörpergehalt wird als nichtflüchtiger Massenanteil nach Trocknung bei 180°C für 30 Minuten bestimmt.

Der erfindungsgemäße kathodische Elektrotauchlack weist vorzugsweise einen pH-Wert von 4,8 - 6,5, besonders bevorzugt von 5,2 - 6,2, insbesondere bevorzugt von 5,5 - 6,0, auf. Der pH-Wert kann mit den hierzu üblicherweise verwendeten und bekannten Methoden, wie beispielsweise potentiometrisch, bestimmt werden.

Der erfindungsgemäße kathodische Elektrotauchlack weist vorzugsweise eine elektrische Leitfähigkeit von 0,8 - 2,5 mS/cm, besonders bevorzugt von 1,1 - 2,3 mS/cm, insbesondere bevorzugt von 1,3 - 1,9 mS/cm, auf. Die Leitfähigkeit kann mit den hierzu üblicherweise verwendeten und bekannten Methoden bestimmt werden.

Der erfindungsgemäße kathodische Elektrotauchlack enthält vorzugsweise 60 - 95 Gew.%, besonders bevorzugt 75 - 90 Gew.%, insbesondere bevorzugt 80 - 85 Gew.%, bezogen auf den Festkörpergehalt des kathodischen Elektrotauchlacks, mindestens eines in Wasser dispergierbaren, kationische Gruppen enthaltenden organischen Bindemittels (A). Die Auswahl des oder der Bindemittel (A) unterliegt grundsätzlich keinen Einschränkungen, so dass prinzipiell jedes in Wasser dispergierbare, kationische Gruppen enthaltende organische Bindemittel geeignet ist.

Vorzugsweise enthält mindestens ein Bindemittel (A) primäre, sekundäre, tertiäre oder quartäre Amino- und/oder Ammoniumgruppen.

Besonders bevorzugt werden als Bindemittel (A) aminmodifizierte Epoxidharze eingesetzt.

Geeignete aminmodifizierte Epoxidharze sind beispielsweise die Addukte von modifizierten oder unmodifizierten Polyepoxiden mit primären oder sekundären Aminen (beschrieben beispielsweise in EP 1171530 A1, Seite 8, Zeile 10 bis Seite 9, Zeile 2; und in US 5236564, Seite 1, Zeile 44 bis Seite 3, Zeile 49).

Geeignete Polyepoxide sind beispielsweise Polyglycidylether, die aus Polyphenolen und Epihalohydrin, insbesondere Epichlorhydrin, erhältlich sind. Als Polyphenole sind insbesondere Bisphenol A und Bisphenol F bevorzugt. Weitere geeignete Polyphenole sind beispielsweise 4,4'-Dihydroxybenzophenon, Bis-(4-hydroxyphenyl)-1,1-ethan, Bis-(4-hydroxyphenyl)-1,1-isobutan, Bis-(4-hydroxy-tertiär-butylphenyl)-2,2'-propan, Bis(2-hydroxynaphthyl)-methan, 1,5-Dihydroxynaphthalin und phenolische Novolakharze. Weitere geeignete Polyepoxide sind Polyglycidylether von mehrwertigen Alkoholen, wie z.B. Ethylenglykol, Diethylenglykol, Triethylenglykol, 1,2-Propylenglykol, 1,4-Propylenglykol, 1,5-Pentandiol, 1,2,6-Hexantriol, Glycerin und Bis(4-hydroxycyclohexyl-)2,2-propan. Es können auch Polyglycidylester von Polycarbonsäuren, wie z.B. Oxalsäure, Bernsteinsäure, Glutarsäure, Terephthalsäure, Hexahydrophthalsäure, Isophthalsäure, 2,6-Napththalindicarbonsäure, eingesetzt werden. Ferner sind Hydantoinepoxide, epoxidiertes Polybutadien und Polyepoxidverbindungen geeignet, die man durch Epoxidierung einer olefinisch ungesättigten aliphatischen Verbindung erhält.

Unter modifizierten Polyepoxiden werden Polyepoxide verstanden, in denen ein Teil der reaktionsfähigen Gruppen mit einer modifizierenden Verbindung umgesetzt worden ist. Als Beispiele für modifizierende Verbindungen werden genannt:
a) Carboxylgruppenhaltige Verbindungen, wie gesättigte oder ungesättigte Monocarbonsäuren (z.B. Benzoesäure, 2-Ethylhexansäure, Versaticsäure), aliphatische, cycloaliphatische und/oder aromatische Dicarbonsäuren verschiedener Kettenlänge (z.B. Adipinsäure, Sebacinsäure, Isophthalsäure oder dimere Fettsäuren), Hydroxyalkylcarbonsäuren (z.B. Milchsäure, Dimethylolpropionsäure) sowie carboxylgruppenhaltige Polyester, oder
b) aminogruppenhaltige Verbindungen, wie Diethylamin oder Ethylhexylamin oder Diamine mit sekundären Aminogruppen, z.B. N,N'-Dialkylalkylendiamine, wie Dimethylethylendiamin, N,N'-Dialkylpolyoxyalkylenamine, wie N,N'-Dimethylpolyoxypropylendiamin, cyanalkylierte Alkylendiamine, wie Bis-N,N'-Cyanethyl-ethylendiamin, cyanalkylierte Polyoxyalkylenamine, wie Bis-N,N'-Cyanethylpolyoxypropylendiamin, Polyaminosamide, wie z.B. Versamide, insbesondere endständige Aminogruppen enthaltende Umsetzungsprodukte aus Diaminen (z.B. Hexamethylendiamin), Polycarbonsäuren, insbesondere Dimerfettsäuren und Monocarbonsäuren, insbesondere Fettsäuren oder das Umsetzungsprodukt von einem Mol Diaminohexan mit zwei Molen Monoglycidylether oder Monoglycidylester, speziell Glycidylester alpha-verzweigter Fettsäuren wie der Versaticsäure, oder
c) hydroxylgruppenhaltige Verbindungen, wie Neopentylglykol, Bis-ethoxyliertes Neopentylglykol, Hydroxypivalinsäureneopentylglykolester, Dimethylhydantoin-N,N'-diethanol, Hexandiol-1,6, Hexandiol-2,5, 1,4-Bis-(hydroxymethyl)-cyclohexan, 1,1-Isopropyliden-bis-(p-phenoxy)-2-propanol, Trimethylolpropan, Pentaerythrit, oder Aminoalkohole, wie Triethanolamin, Methyldiethanolamin oder hydroxylgruppenhaltige Alkylketimine, wie Aminomethylpropandiol-1,3-methyl-isobutylketimin oder Tris-(hydroxymethyl)-aminomethan-cyclohexanonketimin sowie auch Polyglykolether, Polyesterpolyole, Polyetherpolyole, Polycaprolactonpolyole, Polycaprolactampolyole verschiedener Funktionalität und Molekulargewichte, oder
d) gesättigte oder ungesättigte Fettsäuremethylester, die in Gegenwart von Natriummethylat mit Hydroxylgruppen der Epoxidharze umgeestert werden.

Zur Adduktbildung mit Polyepoxiden geeignete primäre und/oder sekundäre Amine sind zum Beispiele Mono- und Dialkylamine, wie Methylamin, Ethylamin, Propylamin, Butylamin, Dimethylamin, Diethylamin, Dipropylamin, Methylbutylamin und dergleichen. Geeignet sind ebenfalls Alkanolamine, wie z.B. Methylethanolamin, Diethanolamin und dergleichen. Ferner sind Dialkylaminoalkylamine, wie z.B. Dimethylaminoethylamin, Diethylaminopropylamin, Dimethylaminopropylamin und dergleichen geeignet. In den meisten Fällen werden niedermolekulare Amine verwendet, jedoch ist es auch möglich, höhermolekulare Monoamine anzuwenden. Die Amine können auch noch andere Gruppen enthalten, jedoch sollen diese die Umsetzung des Amins mit der Epoxidgruppe nicht stören und auch nicht zu einer Gelierung der Reaktionsmischung führen. Bevorzugt werden sekundäre Amine zur Adduktbildung mit Polyepoxiden eingesetzt.

Die für die elektrische Abscheidung erforderlichen Ladungen können durch Protonisierung mit wasserlöslichen Säuren (z.B. Borsäure, Ameisensäure, Milchsäure, Essigsäure) erzeugt werden.

Eine weitere Möglichkeit zur Einführung kationischer Gruppen besteht in der Umsetzung von Epoxidgruppen mit Aminsalzen.

Die aminmodifizierten Epoxidharze können sowohl als fremdvernetzende Kunstharze als auch als selbstvernetzende Kunstharze eingesetzt werden. Selbstvernetzende Kunstharze können beispielsweise durch chemische Modifikation der aminmodifizierten Epoxidharze erhalten werden, z.B. dadurch, dass das aminmodifizierte Epoxidharz mit einem teilblockierten Polyisocyanat, das im Durchschnitt eine freie Isocyanatgruppe pro Molekül besitzt und dessen blockierte Isocyanatgruppen erst bei erhöhten Temperaturen entblockt werden, umgesetzt wird.

Bevorzugt werden als Bindemittel fremdvernetzende aminmodifizierte Epoxidharze in Kombination mit einem geeigneten Vernetzungsmittel eingesetzt. Beispiele für geeignete Vernetzer sind Phenoplaste, polyfunktionelle Mannichbasen, Melaminharze, Benzoguanaminharze und blockierte Polyisocyanate. Bevorzugt werden als Vernetzer im Bindemittel blockierte Polyisocyanate eingesetzt.

Bevorzugt enthält der erfindungsgemäße kathodische Elektrotauchlack 18 bis 28 Gew.%, besonders bevorzugt 22 - 27 Gew.%, insbesondere bevorzugt 24 - 26 Gew.%, bezogen auf den Festkörpergehalt des Elektrotauchlacks, mindestens eines blockierten (Poly)isocyanats als Vernetzer.

Als blockierte Polyisocyanate können beliebige Polyisocyanate verwendet werden, bei denen die Isocyanatgruppen mit einer Verbindung umgesetzt worden sind, so dass das gebildete blockierte Polyisocyanat gegenüber Hydroxyl- und Amingruppen bei Raumtemperatur beständig ist, bei erhöhten Temperaturen, in der Regel im Bereich von etwa 90°C bis etwa 300°C, aber reagiert. Bei der Herstellung der blockierten Polyisocyanate können beliebige für die Vernetzung geeignete organische Polyisocyanate verwendet werden. Bevorzugt sind die Isocyanate, die etwa 3 bis 36, insbesondere etwa 8 bis etwa 15 Kohlenstoffatome enthalten. Beispiele geeigneter Diisocyanate sind Hexamethylendiisocyanat, 2,4-Toluylendiisocyanat, 2,6-Toluylendiisocyanat und 1-Isocyanatomethyl-5-isocyanato-1,3,3,-trimethylcyclohexan. Es können auch Polyisocyanate von höherer Isocyanatfunktionalität verwendet werden. Beispiele dafür sind trimerisiertes Hexamethylendiisocyanat und trimerisiertes Isophorondiisocyanat. Ferner kann man auch Mischungen von Polyisocyanaten verwenden. Die bei der Erfindung als Vernetzungsmittel in Betracht kommenden organischen Polyisocyanate können auch Präpolymere sein, die sich beispielsweise von einem Polyol einschliesslich eines Polyetherpolyols oder eines Polyesterpolyols ableiten.

Für die Blockierung der Polyisocyanate können beliebige geeignete aliphatische, cycloaliphatische oder aromatische Alkylmonoalkohole verwendet werden. Beispiele dafür sind aliphatische Alkohole, wie Methyl-, Ethyl-, Chlorethyl-, Propyl-, Butyl-, Amyl-, Hexyl-, Heptyl-, Octyl-, Nonyl-, 3,5,5-Trimethylhexyl-, Decyl- und Laurylalkohol; cycloaliphatische Alkohole, wie Cyclopentanol und Cyclohexanol; aromatische Alkylalkohole, wie Phenylcarbinol und Methylphenylcarbinol.

Andere geeignete Blockierungsmittel sind Hydroxylamine, wie Ethanolamin, Oxime, wie Methylethylketonoxim, Acetonoxim und Cyclohexanonoxim oder Amine, wie Dibutylamin und Diisopropylamin. Die genannten Polyisocyanate und Blockierungsmittel können bei geeigneten Mengenverhältnissen auch zur Herstellung der oben erwähnten teilblockierten Polyisocyanate verwendet werden.

Ganz besonders bevorzugt wird mindestens ein Bindemittel (A) eingesetzt, dass in einer wäßrigen Bindemitteldispersion enthalten ist, welche erhältlich ist durch
i) Umsetzung
   1) eines Vorproduktes, das unter Zusatz von Phosphinen und/oder Phosphinsalzen als Katalysator herstellbar ist aus a) einer Diepoxidverbindung oder einem Gemisch von Diepoxidverbindungen und b) Monophenol, Diphenol oder einem Gemisch von Mono- und Diphenolen
   2) mit wenigstens einem organischen Amin oder einer Mischung aus organischen Aminen bei auf 60 bis 130°C reduzierten Zugabetemperaturen zu einem Epoxid-Amin-Addukt,
ii) anschliessende oder gleichzeitige Umsetzung der sekundären Hydroxylgruppen, die bei der Umsetzung der Komponenten a) und b) gebildet worden sind, mit Epoxidgruppen des in Stufe i) hergestellten Epoxid-Amin-Adduktes bei einer Temperatur von 110 bis 150°C,
iii) Zusatz eines Vernetzungsmittels oder eines Gemischs verschiedener Vernetzungsmittel bei einer Temperatur von <150°C,
iv) Neutralisierung und
v) Dispergierung der in den Stufen i) bis iv) erhaltenen Mischung in Wasser.

Diese Bindemitteldispersion ist in der EP 0691797 B1 beschrieben.

Der erfindungsgemäße kathodische Elektrotauchlack kann weitere Zusatzstoffe wie z.B. Vernetzer, Pigmente, Weichmacher, Füllstoffe, Netzmittel, enthalten. Insbesondere kann der erfindungsgemäße kathodische Elektrotauchlack ein oder mehrere Vernetzer und/oder ein oder mehrere Pigmente enthalten.

Bevorzugt enthält der erfindungsgemäße kathodische Elektrotauchlack 5 - 40 Gew.%, besonders bevorzugt 10 - 25 Gew.%, insbesondere bevorzugt 15 - 20 Gew.%, bezogen auf den Festkörpergehalt des Elektrotauchlacks, mindestens eines Pigments.

Geeignete Pigmente sind beispielsweise Weißpigmente wie Titandioxid, Aluminiumsilikat, Siliciumdioxid, Zinkoxid, Zinksulfid, Bariumsulfat, Calciumcarbonat, Magnesiumcarbonat und Magnesiumsilikat, oder Schwarzpigmente, wie Russ, oder beispielsweise auch farbige Pigmente. Zu den farbigen Pigmenten zählen beispielsweise anorganische Buntpigmente, wie Eisenoxide oder Chromoxide, und organische Buntpigmente, wie beispielsweise Azopigmente, Triphenylmethanpigmente, indigoide Pigmente, Metallkomplexpigmente, Isoindolinone, Anthrachinone, Perylen- und Perinon-Pigmente, Dioxazin-Pigmente, Chinophthalone, Diketopyrrolopyrrol oder Pyrazolochinazolon-Pigmente.

Ein weiterer Gegenstand der vorliegenden Erfindung ist ein Verfahren zur Herstellung des erfindungsgemäßen kathodischen Elektrotauchlacks. Der erfindungsgemäße kathodische Elektrotauchlack kann hergestellt werden, indem i) mindestens ein in Wasser dispergierbares, kationische Gruppen enthaltendes organisches Bindemittel (A) in einer wäßrigen Lösung dispergiert wird, wodurch eine wäßrige Bindemitteldispersion erhalten wird, ii) die wäßrige Bindemitteldispersion mit (B) 0,005 - 0,5 Gew.%, bezogen auf den Festkörpergehalt des kathodischen Elektrotauchlacks, eines organischen, vierwertigen Titan-, Zirkonium- oder Hafnium-Komplexes mit einem oder mehreren sauerstoffhaltigen Liganden, gemischt wird, und iii) gegebenenfalls weitere Zusatzstoffe eingetragen werden. Die Reihenfolge der Schritte i) - iii) ist dabei nicht zwingend. Das erfindungsgemäße Verfahren kann zur Herstellung beliebiger der zuvor beschriebenen Ausführungsformen des erfindungsgemäßen Elektrotauchlacks dienen.

Pigmente werden vorzugsweise in Form einer Pigmentpaste unter Rühren in die wäßrige Bindemitteldispersion eingearbeitet. Die Herstellung von Pigmentpasten ist allgemein bekannt und beispielsweise in EP 0505445 B1 beschrieben.

Ein weiterer Gegenstand der vorliegenden Erfindung ist die Verwendung des erfindungsgemäßen kathodischen Elektrotauchlacks. Der erfindungsgemäße kathodische Elektrotauchlack kann zur Beschichtung elektrisch leitfähiger Substrate mittels kathodischer Elektrotauchlackierung verwendet werden. Bevorzugt wird der erfindungsgemäße kathodische Elektrotauchlack zur Beschichtung metallischer Substrate, beispielsweise von Substraten aus Stahl, Aluminium, Kupfer, Legierungen daraus oder dergleichen, noch bevorzugter zur Beschichtung phosphatierter metallischer Substrate, noch bevorzugter zur Beschichtung von phosphatiertem Stahl und ganz besonders bevorzugt zur Beschichtung von Kraftfahrzeugkarosserien oder Teilen davon verwendet.

Als metallische Substrate sind beispielsweise Substrate aus Stahl, Aluminium, Kupfer, Legierungen verschiedener Metalle oder dergleichen geeignet. Vorzugsweise werden Substrate aus Stahl verwendet. Besonders bevorzugt werden Substrate aus phosphatierten metallischen Substraten verwendet, insbesondere Substrate aus phosphatiertem Stahl. Unter phosphatierten metallischen Substraten werden metallische Substrate verstanden, die durch entsprechende chemische Vorbehandlung mit phosphathaltigen anorganischen Konversionsschichten versehen wurden. Besonders bevorzugt werden als derartige Substrate Kraftfahrzeugkarosserien oder Teile davon.

Daher ist ein weiterer Gegenstand der vorliegenden Erfindung ein mit dem erfindungsgemäßen kathodischen Elektrotauchlack beschichtetes Substrat, insbesondere ein metallisches Substrat, wie bespielsweise ein Substrat aus Stahl, Aluminium, Kupfer, Legierungen verschiedener Metalle oder dergleichen, bevorzugt ein Substrat aus phosphatiertem Metall, insbesondere aus phosphatiertem Stahl. Ganz besonders bevorzugt sind mit dem erfindungsgemäßen kathodischen Elektrotauchlack beschichtete Kraftfahrzeugkarosserien oder Teile davon.

Daher ist ein weiterer Gegenstand der vorliegenden Erfindung ein Verfahren zur Herstellung eines mit dem erfindungsgemäßen kathodischen Elektrotauchlack beschichteten metallischen Substrats. Bevorzugt wird das metallische Substrat zunächst phosphatiert und anschließend mit dem erfindungsgemäßen kathodischen Elektrotauchlack im kathodischen Elektrotauchlackierungsverfahren beschichtet.

Die Phosphatierung kann nach den bekannten und üblichen Methoden erfolgen. Es können beispielsweise Methoden der Eisenphosphatierung oder der Trikation-Zinkphosphatierung angewendet werden. Bevorzugt wird das metallische Substrat, insbesondere Stahl, zinkphosphatiert.

Die Temperatur des Elektrotauchbades soll üblicherweise zwischen 15 bis 40°C, bevorzugt zwischen 25 und 35°C liegen. Die angelegte Spannung kann in einem großen Bereich schwanken und kann z.B. zwischen 50 und 500 Volt liegen. Typischerweise wird aber mit Spannungen zwischen 250 und 400 Volt gearbeitet. Nach der Abscheidung wird der beschichtete Gegenstand abgespült und ist zum Einbrennen bereit. Die abgeschiedenen Lackfilme werden im allgemeinen bei Temperaturen von 130 bis 220°C über eine Zeitdauer von 8 bis 60 Minuten, vorzugsweise bei 150 bis 180°C über eine Zeitdauer von 12 bis 30 Minuten, eingebrannt.

Die Erfindung wird in den folgenden Beispielen näher erläutert. Alle Angaben über Teile und Prozentsätze sind Gewichtsangaben, falls nicht ausdrücklich etwas anderes festgestellt wird.

### Ausführungsbeispiel

### Herstellbeispiel 1 (Vernetzer)

Verwendet wird der Vernetzer aus EP 0961797 B1 (S. 6 Z. 43 - 52). In einem Reaktor, der mit einem Rührer, Rückflußkühler, Innenthermometer und Inertgaseinleitung ausgestattet ist, werden 1084 g Isomere und höherfunktionelle Oligomere auf Basis von 4,4'-Diphenylmethandiisocyanat mit einem NCO-Equivalentgewicht von 135 (Basonat^{R} A270, Fa. BASF; NCO-Funktionalität ca. 2,7; Gehalt an 2,2'- und 2,4'-Diphenylmethandiisocyanat unter 5%) unter Stickstoffatmosphäre vorgelegt. Man gibt 2 g Dibutylzinnlaurat zu und tropft 1314 g Butyldiglycol mit einer solchen Geschwindigkeit zu, dass die Produkttemperatur unter 70°C bleibt. Gegebenenfalls muss gekühlt werden. Nach Ende der Zugabe wird die Temperatur weitere 120 min bei 70°C gehalten. Bei der nachfolgenden Kontrolle sind keine NCO-Gruppen mehr nachweisbar. Man kühlt auf 65°C ab.
Der Feststoffgehalt liegt bei > 97 % (1 h bei 130°C).

### Herstellbeispiel 2 (Bindemittel-Dispersion)

Verwendet wird die Bindemitteldispersion A aus EP 0961797 B1 (S. 7, Z. 4 - 30). In einem wärmeträgerölbeheizten Laborreaktor, ausgestattet mit Rührer, Rückflusskühler, Thermometer und Inertgaseinleitungsrohr, werden 1128 Teile eines handelsüblichen Epoxidharzes auf Basis Bisphenol A mit einem Epoxidäquivalentgewicht (EEW) von 188; 262 Teile Dodecylphenol, 31,4 Teile Xylol und 228 Teile Bisphenol A vorgelegt und unter Stickstoff auf 127°C aufgeheizt. Unter Rühren werden 1,6 g Triphenylphosphin zugegeben, worauf eine exotherme Reaktion eintritt und die Temperatur auf 160°C steigt. Man lässt wieder auf 130°C abkühlen und kontrollliert anschliessend den Epoxidgehalt. Das EEW von 532 zeigt an, dass > 98% der phenolischen OH-Gruppen reagiert haben. Sodann werden 297,5 Teile Pluriol P 900 (Polypropylenglykol MW 900, BASF) unter gleichzeitiger Kühlung zugegeben. 5 Minuten später gibt man bei 120°C unter weiterer Kühlung 105 Teile Diethanolamin zu. Wenn nach kurzzeitiger Exothermie (Tₘₐₓ 127°C) die Temperatur auf 110°C gesunken ist (30 Min.), gibt man 51 Teile N,N-Dimethylaminopropylamin zu. Nach kurzzeitiger Exothermie (Tₘₐₓ 140°C) lässt man den Ansatz für 2 Stunden bei 130°C weiterreagieren, bis die Viskosität konstant bleibt (1,8 dPas, Platte-Kegel-Viskosimeter bei 23°C, 40%-ig in Solvenon PM (BASF)). Sodann gibt man unter gleichzeitiger Kühlung 58,5 Teile Butylglykol und 887,8 Teile des Vernetzers (Herstellbeispiel 1) zu und trägt bei 105°C aus.
2100 Teile der noch heissen Mischung werden unverzüglich in einer vorgelegten Mischung aus 1945 Teilen vollentsalztem Wasser (VE-Wasser) und 33,1 Teilen Eisessig unter intensivem Rühren dispergiert. Nach kurzem Homogenisieren wird mit weiteren 1404 Teilen VE-Wasser verdünnt und über Plattenfilter K900 (Fa. Seitz) filtriert. Die Dispersion hat folgende Kennzahlen:
Festkörper (1 h bei 130°C): 35,7%
MEQ-Base = 0,657 meq/g Festharz
MEQ-Säure = 0,283 meq/g Festharz
pH = 5,4
Mittlere Teilchengröße = 1250 ? (Lichtstreumethode)
Absetzstabilität = nach 3 Monaten Lagerzeit bei Raumtemperatur kein Bodensatz
Viskosität = 14 sec. (DIN4 Becher bei 23°C)

### Herstellbeispiel 3 (Reibharz)

Verwendet wird das Reibharz A aus EP 0961797 (S. 9, Z. 17 - 21). In einem mit Rührwerk, Innenthermometer, Stickstoffeinlass und Wasserabscheider mit Rückflusskühler ausgestatteten Reaktor werden 30,29 Teile eines Epoxidharzes auf Basis Bisphenol A mit einem Epoxidequivalentgewicht (EEW) von 188; 9,18 Teile Bisphenol A, 7,04 Teile Dodecylphenol und 2,37 Teile Butylglykol vorgelegt. man heizt auf 110°C auf, fügt 1,85 Teile Xylol zu und destilliert dieses unter schwachem Vakuum zusammen mit möglichen Wasserspuren wieder ab. Sodann gibt man 0,07 Teile Triphenylphosphin zu und heizt auf 130°C auf. Nach exothermer Wärmetönung auf 150°C lässt man bei 130°C noch 1 h nachreagieren. Das EEW der Reaktionsmischung liegt dann bei 860. Man kühlt und gibt währenddessen 9,91 Teile Butylglykol und 17,88 Teile eines Polypropylenglykoldiglycidylethers mit EEW 333 (DER 732, Dow Chemicals) zu. Bei 90°C werden 4,23 Teile 2-2'-Aminoethoxyethanol (H₂N-CH₂-CH₂-O-CH₂-CH₂-OH) und 10 min. später 1,37 Teile N,N-Dimethylaminopropylamin zugefügt. Die Reaktionsmischung wird nach kurzzeitiger Exothermie noch für 2 h bei 90°C gehalten, bis die Viskosität konstant bleibt, und anschliessend wird mit 17,66 Teilen Butylglykol verdünnt. Das Harz hat einen Festkörper von 69,8% (gemessen 1 h bei 130°C) und eine Viskosität von 5,5 dPas (gemessen an einer 40%-igen mit Propylenglykolmonomethylether (Solvenon PM, BASF) verdünnten Harzlösung am Platte-Kegel-Viskosimeter bei 23°C).

### Herstellbeispiel 4 (wässrige Pigmentpaste)

Gemäß dem in EP 0505445 B1 (S. 10, Z. 35 - 41) beschriebenen Verfahren wird aus
den in EP 0961797 (S. 9, Tabelle 1, Pigmentpaste B) aufgeführten Ausgangsstoffen eine wäßrige Pigmentpaste hergestellt. Dazu werden zunächst 27,1 Teile entionisiertes Wasser und 25 Teile des Reibharzes aus Herstellbeispiel 3 vorgemischt. Dann fügt man 6 Teile Aluminiumsilikat, 0,6 Teile Russ (geperlt), 38,1 Teile Titandioxid und 2,7 Teile Dibutylzinnoxid zu und mischt 30 min. lang unter einem schnellaufenden Dissolverrührwerk. Anschliessend wird die Mischung in einer Laborkleinmühle während 1 bis 1,5 h bis zu einer Hegmann-Feinheit von kleiner 12 dispergiert.

### Vergleichsbeispiel 1 und Beispiel 1 (kathodische Elektrotauchlacke)

Zur Herstellung von herkömmlichen (Vergleichsbeispiel 1) und erfindungsgemässen (Beispiel 1) kathodischen Elektrotauchlacken werden 2006 Teile der Bindemitteldispersion aus Herstellbeispiel 2, 603 Teile der wäßrigen Pigmentpaste aus Herstellbeispiel 4 und 2391 Teile entionisiertes Wasser zum Elektrotauchlackbad kombiniert. Man verfährt dabei so, dass die Bindemitteldispersion vorgelegt und mit entionisiertem Wasser verdünnt wird. Anschliessend wird unter Rühren die Pigmentpaste eingetragen. Die angegebenen Werte entsprechen Gewichtsanteilen (g). Zur Herstellung der erfindungsgemäßen Elektrotauchlacke werden dem Elektrotauchlack ausserdem 100 ppm, 200 ppm oder 300 ppm, bezogen auf den gesamten Elektrotauchlack, Zirkon (IV)-Acetylacetonat zugesetzt.

Man lässt das den kathodischen Elektrotauchlack 3 Tage bei Raumtemperatur unter Rühren altern, bevor er zur kathodischen Elektrotauchlackierung verwendet wird. Das Tauchbad hat einen pH-Wert von 5,85 und einen Leitwert von 1,84 mS/cm. Die Abscheidung der Lackfilme erfolgt während 2 Minuten bei 220 Volt Abscheide- und 350 Volt Abrißspannung bei einer Badtemperatur von 29°C auf kathodisch geschalteten zinkphosphatierten L-förmigen Stahlprüftafeln ohne Cr(VI)-Nachspülung in der Vorbehandlung. Die L-förmigen Prüfbleche werden so in das Elektrotauchbad eingebracht, dass ein Teil des Blechs senkrecht und ein anderer Teil des Blechs waagerecht im Bad angeordnet ist. In einigen Fällen werden die Prüfbleche nach dem Abscheiden des Lackfilms nicht unmittelbar dem Bad entnommen, sondern noch weitere 15 Minuten im Bad belassen. In allen Fällen werden die abgeschiedenen Lackfilme (Schichtdicke 21 µm) mit entionisiertem Wasser nachgespült und während 15 Minuten bei 175°C (Objekttemperatur) eingebrannt.

### Prüfung auf Kraterneigung

Der kathodische Elektrotauchlack aus Vergleichsbeispiel 1 wird nach der Beschichtung der Prüfbleche aus Vergleichsbeispiel 1 mit 100 ppm Dinatriumhydrogenphosphat versetzt und 24 h gerührt. Anschliessend wird der pH-Wert mit Ameisensäure auf 5,5 eingestellt. Zur Herstellung der erfindungsgemäßen Elektrotauchlacke werden dem Elektrotauchlack ausserdem 100 ppm, 200 ppm oder 300 ppm, bezogen auf den gesamten Elektrotauchlack, Zirkon (IV)-Acetylacetonat zugesetzt. Anschliessend werden die herkömmlichen und erfindungsgemäßen Elektrotauchlacke erneut 24 h gerührt, bevor die Abscheidung der Lackfilme wie oben beschrieben erfolgt. Nach dem Einbrennen wird die Krateranzahl auf einer Fläche von 10 x 10 cm des im kathodischen Elektrotauchbad waagerecht angebrachten Teils des Prüfblechs beurteilt. Die Ergebnisse sind in Tabelle 1 dargestellt.

**Tabelle 1**

| **kathodischer Elektrotauchlack** | **herkömmlich** | **erfindungsgemäß** | | |
|---|---|---|---|---|
| | | **Zirkon(IV)-Acetylacetonat** | | |
| | | **100 ppm** | **200 ppm** | **300 ppm** |
| pH-Wert | 5,85 | 5,84 | 5,85 | 5,85 |
| Leitwert | 1,84 | 1,83 | 1,81 | 1,78 |
| L-Blech | keine Krater | keine Krater | keine Krater | keine Krater |
| L-Blech + 15 min im Bad | keine Krater | keine Krater | keine Krater | keine Krater |
| | + 100 ppm Na₂HPO₄ + Ameisensäure zur Einstellung des pH-Werts auf 5,5 | | | |
| L-Blech | **> 100 Krater** | **< 100 Krater** | **< 10 Krater** | **keine Krater** |
| L-Blech + 15 min im Bad | **> 1000 Krater** | **< 100 Krater** | **< 100 Krater** | **< 10 Krater** |

Die Ergebnisse zeigen, dass bei kathodischer Elektrotauchlackierung in phosphatkontaminierten kathodischen Elektrotauchbädern die Anzahl der Krater bei Verwendung des erfindungsgemäßen kathodischen Elektrotauchlacks im Vergleich zur Verwendung eines herkömmlichen kathodischen Elektrotauchlacks deutlich reduziert ist.
Unter Praxisbedingungen muss bei der Beschichtung phosphatierter Substrate stets mit einer Kontamination des Elektrotauchbads durch Phosphat gerechnet werden, da trotz sorgfältigem Abspülen der phosphatierten Substrate ein Einbringen von Phosphationen auf der Oberfläche der phosphatierten Substrate in das Elektrotauchbad nicht vermieden werden kann. Eine "ideale", d.h. hier phosphatfreie Zusammensetzung des Elektrotauchbads, wie sie in den obigen Beispielen ebenfalls untersucht wurde (keine Krater), liegt daher unter Praxisbedingungen nicht vor.

## Patentansprüche

1. Kathodischer Elektrotauchlack, enthaltend (A) mindestens ein in Wasser dispergierbares, kationische Gruppen enthaltendes organisches Bindemittel, **dadurch gekennzeichnet, dass** dem kathodischen Elektrotauchlack 0,005 - 0,5 Gew.%, bezogen auf den Festkörpergehalt des kathodischen Elektrotauchlacks, (B) eines organischen, vierwertigen Titan-, Zirkonium- oder Hafnium-Komplexes mit einem oder mehreren sauerstoffhaltigen Liganden zugegeben wurden.

2. Kathodischer Elektrotauchlack nach Anspruch 1, **dadurch gekennzeichnet, dass** mindestens ein sauerstoffhaltiger Ligand ein zwei- oder mehrzähniger Ligand ist.

3. Kathodischer Elektrotauchlack nach Anspruch 1, **dadurch gekennzeichnet, dass** mindestens ein sauerstoffhaltiger Ligand ein Alkanolat oder Enolat ist.

4. Kathodischer Elektrotauchlack nach Anspruch 3, **dadurch gekennzeichnet, dass** mindestens ein Ligand ein von einem ß-Diketon abgeleitetes Enolat ist.

5. Kathodischer Elektrotauchlack nach einem der Ansprüche 1 bis 4, **dadurch gekennzeichnet, dass** der Metallkomplex (B) ein Zirkonium- oder ein Hafnium-Komplex ist.

6. Kathodischer Elektrotauchlack nach Anspruch 1, **dadurch gekennzeichnet, dass** der Metallkomplex (B) Zirkonium-Acetylacetonat, Hafnium-Acetylacetonat oder Titan-Acetylacetonat ist.

7. Kathodischer Elektrotauchlack nach einem der Ansprüche 1 bis 6, **dadurch gekennzeichnet, dass** dem Elektrotauchlack weiterhin mindestens ein für kathodische Elektrotauchlacke geeigneter zinnhaltiger Vernetzungskatalysator zugegeben wurde.

8. Kathodischer Elektrotauchlack nach Anspruch 7, **dadurch gekennzeichnet, dass** der weitere Vernetzungskatalysator Dibutylzinnoxid oder Dioctylzinnoxid ist.

9. Kathodischer Elektrotauchlack nach einem der Ansprüche 1 bis 8, **dadurch gekennzeichnet, dass** das Bindemittel (A) ein aminmodifiziertes Epoxidharz ist.

10. Verfahren zur Herstellung eines kathodischen Elektrotauchlacks nach einem der Ansprüche 1 bis 9, **dadurch gekennzeichnet, dass** i) mindestens ein in Wasser dispergierbares, kationische Gruppen enthaltendes organisches Bindemittel (A) in einer wäßrigen Lösung dispergiert wird, wodurch eine wäßrige Bindemitteldispersion erhalten wird, ii) die wäßrige Bindemitteldispersion mit (B) 0,005 - 0,5 Gew.%, bezogen auf den Festkörpergehalt des kathodischen Elektrotauchlacks, eines organischen, vierwertigen Titan-, Zirkonium- oder Hafnium-Komplexes mit einem oder mehreren sauerstoffhaltigen Liganden, gemischt wird, und iii) gegebenenfalls weitere Zusatzstoffe eingetragen werden.

11. Verwendung eines kathodischen Elektrotauchlacks nach einem der Ansprüche 1 bis 9 zur Beschichtung elektrisch leitfähiger metallischer Substrate mittels kathodischer Elektrotauchlackierung.

12. Verwendung nach Anspruch 11, wobei die Substrate phosphatierte metallische Substrate sind, insbesondere Substrate aus phosphatiertem Stahl.

13. Verwendung nach Anspruch 11 oder 12, wobei die Substrate Kraftfahrzeugkarosserien oder Teile davon sind.

14. Beschichtete metallische Substrate, die mit einem kathodischen Elektrotauchlack nach einem der Ansprüche 1 bis 9 beschichtet wurden.

15. Beschichtete Substrate nach Anspruch 14, wobei die Substrate Kraftfahrzeugkarosserien oder Teile davon sind.

16. Verfahren zur Herstellung eines mit einem kathodischen Elektrotauchlack nach einem der Ansprüche 1 bis 9 beschichteten metallischen Substrats, **dadurch gekennzeichnet, dass** das metallische Substrat zunächst phosphatiert und anschliessend mit derm kathodischen Elektrotauchlack nach einem der Ansprüche 1 bis 9 beschichtet wird.

17. Verfahren nach Anspruch 16, wobei es sich um Substrate aus phosphatiertem Stahl handelt.

18. Verfahren nach Anspruch 16 oder 17, wobei die Substrate Kraftfahrzeugkarosserien oder Teile davon sind.

## Claims

1. Cathodic electrodeposition coating material comprising (A) at least one water-dispersible organic binder containing cationic groups, **characterized in that** the cathodic electrodeposition coating material has been admixed with 0.005% - 0.5% by weight, based on the solids content of the cathodic electrodeposition coating material, of (B) an organic, tetravalent titanium, zirconium or hafnium complex having one or more oxygen-containing ligands.

2. Cathodic electrodeposition coating material according to Claim 1, **characterized in that** at least one oxygen-containing ligand is a bidentate or multidentate ligand.

3. Cathodic electrodeposition coating material according to Claim 1, **characterized in that** at least one oxygen-containing ligand is an alkanolate or enolate.

4. Cathodic electrodeposition coating material according to Claim 3, **characterized in that** at least one ligand is an enolate derived from a ß-diketone.

5. Cathodic electrodeposition coating material according to any one of Claims 1 to 4, **characterized in that** the metal complex (B) is a zirconium complex or a hafnium complex.

6. Cathodic electrodeposition coating material according to Claim 1, **characterized in that** the metal complex (B) is zirconium acetylacetonate, hafnium acetylacetonate or titanium acetylacetonate.

7. Cathodic electrodeposition coating material according to any one of Claims 1 to 6, **characterized in that** the electrodeposition coating material has been admixed additionally with at least one tin-containing crosslinking catalyst suitable for cathodic electrodeposition coating materials.

8. Cathodic electrodeposition coating material according to Claim 7, **characterized in that** the further crosslinking catalyst is dibutyltin oxide or dioctyltin oxide.

9. Cathodic electrodeposition coating material according to any one of Claims 1 to 8, **characterized in that** the binder (A) is an amine-modified epoxy resin.

10. Process for preparing a cathodic electrodeposition coating material according to any one of Claims 1 to 9, **characterized in that** i) at least one water-dispersible organic binder (A) containing cationic groups is dispersed in an aqueous solution to give an aqueous binder dispersion, ii) the aqueous binder dispersion is mixed with (B) 0.005% - 0.5% by weight, based on the solids content of the cathodic electrodeposition coating material, of an organic, tetravalent titanium, zirconium or hafnium complex having one or more oxygen-containing ligands, and iii) if desired, further additives are introduced.

11. Use of a cathodic electrodeposition coating material according to any one of Claims 1 to 9 to coat electrically conductive metallic substrates by means of cathodic electrodeposition coating.

12. Use according to Claim 11, the substrates being phosphated metallic substrates, more particularly phosphated steel substrates.

13. Use according to Claim 11 or 12, the substrates being motor vehicle bodies or parts thereof.

14. Coated metallic substrates coated with a cathodic electrodeposition coating material according to any one of Claims 1 to 9.

15. Coated substrates according to Claim 14, the substrates being motor vehicle bodies or parts thereof.

16. Process for producing a metallic substrate coated with a cathodic electrodeposition coating material according to any one of Claims 1 to 9, **characterized in that** first the metallic substrate is phosphated and then coated with the cathodic electrodeposition coating material according to any one of Claims 1 to 9.

17. Process according to Claim 16, the substrates being of phosphated steel.

18. Process according to Claim 16 or 17, the substrates being motor vehicle bodies or parts thereof.

## Revendications

1. Peinture pour électrodéposition cathodique, contenant (A) au moins un liant organique contenant des groupes cationiques dispersible dans l'eau, **caractérisée en ce que** 0,005 à 0,5 % en poids, par rapport à la teneur en solides de la peinture pour électrodéposition cathodique, de (B) un complexe de titane, de zirconium ou d'hafnium tétravalent organique contenant un ou plusieurs ligands oxygénés a été ajouté à la peinture pour électrodéposition cathodique.

2. Peinture pour électrodéposition cathodique selon la revendication 1, **caractérisée en ce qu'**au moins un ligand oxygéné est un ligand bidentate ou d'une denticité supérieure.

3. Peinture pour électrodéposition cathodique selon la revendication 1, **caractérisée en ce qu'**au moins un ligand oxygéné est un alcanoate ou un énolate.

4. Peinture pour électrodéposition cathodique selon la revendication 3, **caractérisée en ce qu'**au moins un ligand est un énolate dérivé d'une β-dicétone.

5. Peinture pour électrodéposition cathodique selon l'une quelconque des revendications 1 à 4, **caractérisée en ce que** le complexe métallique (B) est un complexe de zirconium ou d'hafnium.

6. Peinture pour électrodéposition cathodique selon la revendication 1, **caractérisée en ce que** le complexe métallique (B) est l'acétylacétonate de zirconium, l'acétylacétonate d'hafnium ou l'acétylacétonate de titane.

7. Peinture pour électrodéposition cathodique selon l'une quelconque des revendications 1 à 6, **caractérisée en ce qu'**au moins un catalyseur de réticulation contenant de l'étain approprié pour les peintures pour électrodéposition cathodique a en outre été ajouté à la peinture pour électrodéposition.

8. Peinture pour électrodéposition cathodique selon la revendication 7, **caractérisée en ce que** le catalyseur de réticulation supplémentaire est l'oxyde de dibutyl-étain ou l'oxyde de dioctyl-étain.

9. Peinture pour électrodéposition cathodique selon l'une quelconque des revendications 1 à 8, **caractérisée en ce que** le liant (A) est une résine époxyde modifiée par une amine.

10. Procédé de fabrication d'une peinture pour électrodéposition cathodique selon l'une quelconque des revendications 1 à 9, **caractérisée en ce que** i) au moins un liant organique (A) contenant des groupes cationiques dispersible dans l'eau est dispersé dans une solution aqueuse, une dispersion aqueuse de liant étant ainsi obtenu, ii) la dispersion aqueuse de liant est mélangée avec (B) 0,005 à 0,5 % en poids, par rapport à la teneur en solides de la peinture pour électrodéposition cathodique, d'un complexe de titane, de zirconium ou d'hafnium tétravalent organique contenant un ou plusieurs ligands oxygénés, et iii) des additifs supplémentaires sont éventuellement introduits.

11. Utilisation d'une peinture pour électrodéposition cathodique selon l'une quelconque des revendications 1 à 9 pour le revêtement de substrats métalliques électriquement conducteurs par électrodéposition cathodique.

12. Utilisation selon la revendication 11, dans laquelle les substrats sont des substrats métalliques phosphatés, notamment des substrats en acier phosphaté.

13. Utilisation selon la revendication 11 ou 12, dans laquelle les substrats sont des carrosseries automobiles ou des parties de celles-ci.

14. Substrats métalliques revêtus, qui ont été revêtus avec une peinture pour électrodéposition cathodique selon l'une quelconque des revendications 1 à 9.

15. Substrats revêtus selon la revendication 14, dans lesquels les substrats sont des carrosseries automobiles ou des parties de celles-ci.

16. Procédé de fabrication d'un substrat métallique revêtu avec une peinture pour électrodéposition cathodique selon l'une quelconque des revendications 1 à 9, **caractérisé en ce que** le substrat métallique est tout d'abord phosphaté, puis revêtu avec la peinture pour électrodéposition cathodique selon l'une quelconque des revendications 1 à 9.

17. Procédé selon la revendication 16, dans lequel il s'agit de substrats en acier phosphaté.

18. Procédé selon la revendication 16 ou 17, dans lequel les substrats sont des carrosseries automobiles ou des parties de celles-ci.
